# EUROPEAN PATENT SPECIFICATION

(11) **EP 1 786 616 B1**
(45) Date of publication and mention of the grant of the patent: **06.04.2011**
(21) Application number: 05763448.7
(22) Date of filing: 21.07.2005
(51) Int. Cl.: B29C 70/54, B29C 70/08, B29C 70/52

(54) **PROCESS AND A PLANT FOR MAKING A MULTI-LAYER PANEL AND MULTI-LAYER PANEL THUS MADE**
VERFAHREN UND ANLAGE ZUR HERSTELLUNG EINER MEHRLAGIGEN PLATTE UND SO HERGESTELLTE MEHRLAGIGE PLATTE
PROCEDE ET INSTALLATION DE FABRICATION D'UN PANNEAU MULTICOUCHE ET PANNEAU MULTICOUCHE AINSI PRODUIT

(30) Priority: 23.07.2004 IT MI20041491
(43) Date of publication of application: 23.05.2007
(73) Proprietor: Top Glass S.p.A., 25128 Brescia (IT)
(72) Inventor: Top Glass S.p.A., 25128 Brescia (IT)
(74) Representative: Rapisardi, Mariacristina
(86) International application number: PCT/EP2005/007979
(87) International publication number: WO 2006/008166

(56) References cited:
- EP-A- 0 822 062
- WO-A-01/38074
- GB-A- 1 265 835

## Description

The present invention refers to a process and a plant for making a multi-layer panel and the multi-layer panel thus made.

For some time multi-layer panels have been present on the market having a core on the opposite faces of which sheets of composite material are applied that give great strength to the overall structure.

The structure of a multi-layer panel foreseeing reinforcement sheets made from composite material, consisting of a resin-based matrix in which a fibrous phase is dispersed, is particularly advantageous due to the high ratio between mechanical strength and weight, and can thus have various applications in different technological fields, from the building trade to the transport sector, etc.

Such a panel structure can nevertheless suffer from various drawbacks due above all to not always being able to optimally resist delamination between core and outer reinforcement sheets, and to not always being able to withstand mechanical stresses above all in the direction perpendicular to the main plane on which it lies.

In order to at least partially overcome these drawbacks it has been proposed to fixedly join together the reinforcement sheets with a sewing operation carried out through the core of the structure, but such a method is extremely laborious and burdensome in terms of time and therefore is also expensive and not very productive.

EP 0822062 and GB 1265835 disclose a process according to preamble of claim 1. WO 01/38074 discloses a plant according to preamble of claim 16.

The technical task proposed of the present invention is, therefore, that of making a process for making a multi-layer panel that allows the aforementioned technical drawbacks of the prior art to be eliminated.

In this technical task a purpose of the invention is that of making a process for making a multi-layer panel that allows a multi-layer panel to be obtained having an optimal capability to resist delamination and mechanical stresses in the direction perpendicular to the plane on which it lies. Another purpose of the invention is that of making a process for making a multi-layer panel that is simple and highly productive.

The technical task, as well as these and other purposes, according to the present invention, are accomplished by making a process for making a multi-layer panel, characterised in that a first and second fibre-based material is applied on the opposite faces of a core of said panel, said first and second fibre-based material are joined through a needling operation through the thickness of said core, said first and second fibre-based material are impregnated with a resin-based material and said resin-based material is introduced inside the needling holes for their entire extension, and said resin-based material is polymerised so that at least the polymerised resin-based material present in said needling holes defines a plurality of structural rigidifying elements that connect said first and second fibre-based material.

The present invention also discloses a multi-layer panel structure, characterised in that it comprises a core arranged between a first reinforcement sheet made from composite material and a second reinforcement sheet made from composite material joined through needling through the thickness of said core, said structure also having a plurality of structural rigidifying elements that connect said first and second reinforcement sheet, said rigidifying elements comprising at least one polymerised resin-based material present inside the needling holes.

Last but not least the present invention discloses a plant for continuously making a multi-layer laminate comprising a core arranged between a first reinforcement sheet made from composite material and a second reinforcement sheet made from composite material, characterised in that it has a feed unit of a first and second fibre-based material on the opposite sides of said core, a needling unit to join fibres of said first and second fibre-based material, an impregnation unit of said fibres with a resin-based material, said impregnation unit having pressing means suitable for applying a pressure on said resin-based material so as to ensure the introduction of said resin-based material also along the entire extension of the needling holes passing through the thickness of said core, a forming unit carrying out, through suitable heat treatment, the polymerisation of said resin-based material, and a cutting unit of said laminate thus formed.

One of the salient aspects of the invention is given by the use of needling to join the fibre reinforcement materials present outside the panel.

A needling unit allows two outer fibre reinforcement materials to be joined through cores of different thickness, or through a core even having variable thickness, without substantially having to undergo structural modifications or complications and without the risk of modifying or penalising its performance.

This is particularly advantageous especially compared to a needling unit conventionally adopted for the same purpose, which is not as adaptable in such a flexible and easy way when it is made to operate on cores of different thickness or on a core with variable thickness. Indeed, in such a case, unless complex structural adaptations are carried out, defective operation of the sewing unit can occur with the production of needling points that are too loose or too tight and/or with possible breaking of the sewing thread.

Other characteristics of the present invention are defined, moreover, in the subsequent claims.

Further characteristics and advantages of the invention shall become clearer from the description of a preferred but not exclusive embodiment of the process and a plant for producing a multi-layer panel according to the finding, illustrated for indicating and not limiting purposes in the attached drawings, in which:

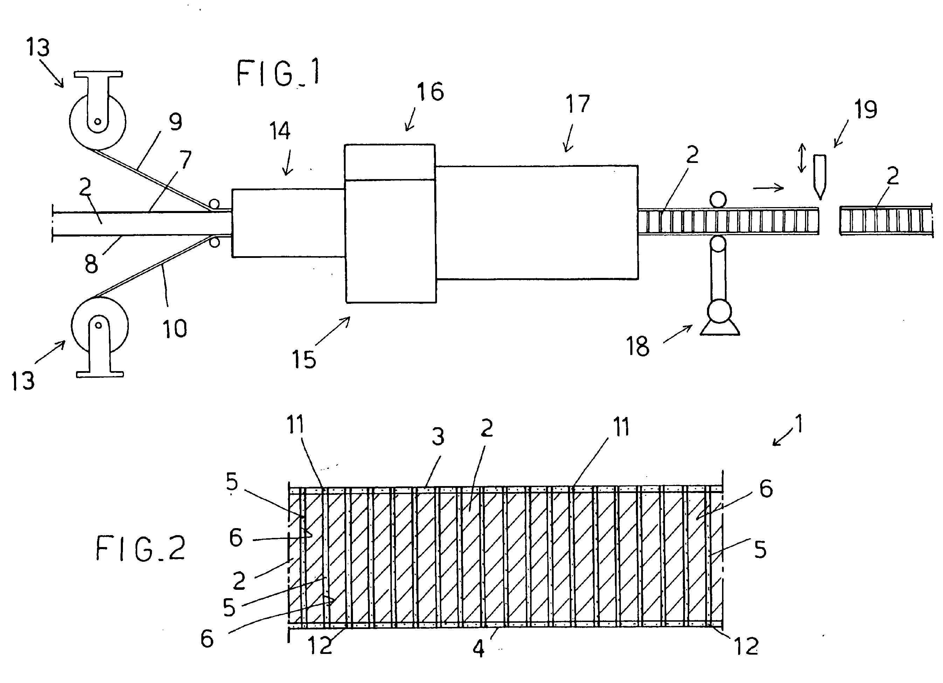

figure 1 shows a schematic view of a plant according to the invention; and
figure 2 shows a schematic view of a section of a multi-layer panel according to the invention.

With reference to the quoted figures, a multi-layer panel structure according to the invention is shown wholly indicated with reference numeral 1.

The panel 1 comprises a core 2 arranged between a first reinforcement sheet 3 made from composite material and a second reinforcement sheet 4 made from composite material. The panel structure 1 has a plurality of structural rigidifying elements 5 that connect the first and second reinforcement sheets 3 and 4.

The rigidifying elements 5 comprise at least one polymerised resin-based material present inside holes 6, 11 and 12 passing through the thickness of the core 2 and of the first and second reinforcement sheet 3 and 4.

The holes 6, 11 and 12 are made by a needling operation with which fibres of the first sheet and second reinforcement sheet 3 and 4 are joined by needling.

Of course, the fibres of the first sheet and second reinforcement sheet 3 and 4 joined by needling are impregnated with the resin-based material present inside the holes 6, 11 and 12.

The first and second reinforcement sheets 3 and 4 are made from identical or even different composite material. According to the type of application the reinforcement sheets 3 and 4 of the panel 1 can give analogous or different mechanical properties.

The resin-based material present in the reinforcement sheets 3 and 4 can be continuous and/or discontinuous, natural and/or synthetic fibre, made from fabric, non-woven fabric, flock, felt, etc.

As an example, each reinforcement sheet 3 and 4 can be made from a fibreglass mattress and a thermosetting epoxy, phenolic or polyurethane resin, etc.

The core 2, instead, as an example can be a PVC or foamed polyurethane slab or a phenolic resin foam, etc., or from another material preferably suitable for being perforated through needling.

The multi-layer panel structure 1 can have an overall parallelepiped configuration with flat faces, but it is also conceivable to have a honeycombed configuration suitable for flexibly adapting to variously shaped surfaces.

Each reinforcement sheet 3 and 4, just like the core 2, can have a single layer structure or in turn a multi-layer structure.

The process for making the multi-layer panel structure 1 consists of applying a first and second fibre-based material 9 and 10 on the opposite faces 7 and 8 of the core 2, joining the first and second fibre-based material 9 and 10 through a needling operation through the thickness of the core 2, carrying out the impregnation of the first and second fibre-based material 9 and 10 with a resin-based material and introducing the resin-based material inside the needling holes 6, 11, 12 for their entire extension, and polymerising the resin-based material so that at least the polymerised resin-based material present in such a plurality of through holes 6, 11 and 12 defines the plurality of structural rigidifying elements 5 that connect the first and second fibre-based material 9 and 10.

The needling can be prior or subsequent to the impregnation, and in the latter case the needling needles themselves advantageously pull the resin-based material inside the needling holes that they create.

More generally, the introduction of the resin-based material into the through holes 6, 11 and 12 is preferably ensured through the exertion of a pressure on the resin-based material.

Such pressure can, as stated, be carried out through the needling needles, but also for example through a vacuum suction system, or a closed-mould injection,system. Advantageously, the needling, the impregnation and the polymerisation are carried out in a continuous process, for example a continuous pultrusion process.

The plant for continuously making a multi-layer laminate 1 has a feed unit 13 of the first and second fibre-based material 9 and 10 on the opposite sides 7 and 8 of the core 2, a needling unit 14 to join fibres of the first and second fibre-based material 9 and 10, an impregnation unit 15 of the fibres with a resin-based material, the impregnation unit 15 having pressing means 16 suitable for applying a pressure on the resin-based material so as to ensure the introduction of the resin-based material also along the entire extension of the needling holes 6 passing through the thickness of the core 2, and a forming unit 17 carrying out, through a suitable forming mould, the forming of the laminate and, through suitable heat treatment, the polymerisation of the resin-based material.

In order to eliminate the possible surface roughness of the laminate that originates due to the friction between the unpolymerised outer reinforcement sheets 3 and 4 and the forming mould of the forming unit 17, it is possible to associate a protective layer (not shown), for example a polyester film, outside one or both of the unpolymerised reinforcement sheets 3 and 4, before entry into the forming unit 17.

The protective layer protects the reinforcement sheet and eliminates the friction between the unpolymerised reinforcement sheet and the forming mould of the forming unit 17, allowing the removal from the reinforcement sheet of resin scraped away at the entry of the forming mould to be limited and allowing a laminate to be obtained with one or both of the surfaces perfectly smooth.

Each protective layer is removable to be detached once the forming operation of the laminate has been completed.

The plant is completed by a pulling unit 18 of the formed laminate, for example with pulling rollers, and by a final cutting unit 19.

The operation of the plant according to the invention is clear from what has been described and illustrated and, in particular, is briefly the following.

The materials 9 and 10, for example formed from "mattresses" of fibre, are unwound from the feed reels of the feeding unit 13, and are associated with the faces 7 and 8 of the core 2. The assembly consisting of the core 2 and the materials 9 and 10 then enters into the needling unit 14 where the materials 9 and 10 are needled.

The speed at which the needling process is carried out allows high productivity of the plant, especially compared to a conventional pultrusion plant associated with a sewing unit to join fibre materials before impregnation.

At the subsequent stage in the unit 15 the materials 9 and 10 are impregnated with the resin-based material. In this step the pressing means 16 determine the complete impregnation of the materials 9 and 10 and the introduction of the resin-based material also along the entire length of the needling holes made through the materials 9 and 10 during the previous stage.

In the unit 17 the forming and polymerisation of the resin-based material is carried out.

The laminate having the final shape is pulled by the rollers of the unit 18 outside of the unit 17 and is finally subjected to cutting to a predetermined length at the unit 19.

The process for making a multi-layer panel thus conceived can undergo numerous modifications and variations, all of which are covered by the inventive concept as defined in the appended claims; moreover, all of the details can be replaced with technically equivalent elements provided they fall within the scope of the claims. In practice, the materials used, as well as the sizes, can be whatever according to the requirements and the state of the art.

## Claims

1. Process for making a multi-layer panel (1),a first (9) and second (10) fibre-based material being applied on the opposite faces of a core (2) of said panel (1), said core (2) being a single or multi-layer structured insert able to be perforated through needling, fibres of said first (9) and second (10) fibre-based material being joined through a needling operation through the thickness of said core (2), said first (9) and second (10) fibre-based material being impregnated with a resin-based material and said resin-based material being polymerised, said needling, said impregnation and said polymerisation being carried out in a continuous process, said continuous process being a pultrusion process, **characterised in that** said needling operation creates holes passing through the thickness of said core (2) and of the first (9) and second (10) fibre-based material for introduction of said resin-based material inside said needling holes (6,11,12) for their entire extension so that at least polymerization of the resin-based material present in said needling holes (6,11,12) defines a plurality of structural rigidifying elements (5) that connect the first (9) and second (10) fibre-based material spaced apart by said core (2) therebetween.

2. Process according to the previous claim, **characterised in that** said needling precedes said impregnation.

3. Process according to one or more of the previous claims, **characterised in that** said needling operation follows said impregnation.

4. Process according to one or more of the previous claims, **characterised in that** said impregnation is carried out through the application of a pressure on said resin-based material.

5. Process according to one or more of the previous claims, **characterised in that** said pressure is carried out through a vacuum system.

6. Process according to one or more of the previous claims, **characterised in that** said pressure is carried out through a closed-mould injection system.

7. Process according to one or more of the previous claims, **characterised in that** said pressure is carried out by said needling needles.

8. Process according to one or more of the previous claims, **characterised in that** after said impregnation and before said polymerisation and the forming of said panel (1), outside at least one of said first (9) and second (10) fibre-based material a corresponding protective layer is associated that can be removed at the end of said forming so as to obtain a smooth surface of said panel.

9. Multi-layer panel structure obtained by a process according to one or more of the previous claims.

10. Pultrusion plant for continuously making a multi-layer laminate comprising a core (2) arranged between a first (9) reinforcement sheet made from composite material and a second (10) reinforcement sheet made from composite material, said core (2) being a single or multi-layered structured insert able to be perforated through needling, **characterised in that** it has a feed unit (13) of a first (9) and second (10) fibre-based material on the opposite sides of said core (2), a needling unit (14), said needling unit being positioned in relation to said core (2) so as to operate through the thickness of said core (2) and of the first (9) and second (10) fibre-based material to join fibres of said first (9) and second (10) fibre-based material through the thickness of said core (2), an impregnation unit (15) of said fibres with a resin-based material, said impregnation unit having pressing means (16) suitable for applying a pressure on said resin-based material so as to ensure the introduction of said resin-based material also along the entire extension of the needling holes (6), and a forming unit (17) carrying out, through suitable heat treatment, the polymerisation of said resin-based material, so that at least polymerization of the resin-based material present in said needling holes (6) defines a plurality of structural rigidifying elements (5) that connect the first (9) and second (10) fibre-based material spaced apart by said core (2) therebetween.

## Patentansprüche

1. Verfahren zur Herstellung eines mehrschichtigen Paneels (1), wobei ein erstes (9) und ein zweites (10) faserbasiertes Material auf den entgegengesetzten Seiten eines Kerns (2) des genannten Paneels (1) angebracht werden, es sich beim genannten Kern (2) um einen ein- oder mehrschichtig strukturierten Einsatz handelt, der durch Nadelung perforiert werden kann, die Fasern des genannten ersten (9) und zweiten (10) faserbasierten Materials durch einen Nadlungsvorgang durch die Dicke des genannten Kerns (2) verbunden werden, das genannte erste (9) und zweite (10) faserbasierte Material mit einem harzbasierten Material imprägniert werden und das genannte harzbasierte Material polymerisiert wird, das genannte Nadeln, das genannte Imprägnieren und das genannte Polymerisieren in einem kontinuierlichen Verfahren durchgeführt werden und das genannte kontinuierliche Verfahren ein Pultrusionsverfahren ist, **dadurch gekennzeichnet, dass** das genannte Nadeln Löcher schafft, die durch die Dicke des genannten Kerns (2) und des ersten (9) und zweiten (10) faserbasierten Materials führen, um das genannte harzbasierte Material in diese Nadlungslöcher (6, 11, 12) über ihre ganze Länge einzuführen, sodass mindestens das Polymerisieren des in den genannten Nadlungslöchern (6, 11, 12) enthaltenen harzbasierten Materials eine Vielzahl struktureller versteifender Elemente (5) definiert, die das erste (9) und das zweite (10) faserbasierte Material, in Abstand gehalten von genanntem Kern (2), verbinden.

2. Verfahren nach dem vorangehenden Anspruch, **dadurch gekennzeichnet, dass** das genannte Nadeln vor dem genannten Imprägnieren stattfindet.

3. Verfahren nach einem oder mehreren der vorangehenden Ansprüche, **dadurch gekennzeichnet, dass** das genannte Nadeln nach dem genannten Imprägnieren stattfindet.

4. Verfahren nach einem oder mehreren der vorangehenden Ansprüche, **dadurch gekennzeichnet, dass** das genannte Imprägnieren mittels der Anwendung eines Drucks auf das genannte harzbasierte Material durchgeführt wird.

5. Verfahren nach einem oder mehreren der vorangehenden Ansprüche, **dadurch gekennzeichnet, dass** der genannte Druck über ein Vakuumsystem ausgeübt wird.

6. Verfahren nach einem oder mehreren der vorangehenden Ansprüche, **dadurch gekennzeichnet, dass** der genannte Druck über ein Einspritzsystem mit geschlossener Form ausgeübt wird.

7. Verfahren nach einem oder mehreren der vorangehenden Ansprüche, **dadurch gekennzeichnet, dass** der genannte Druck über die genannten Nadlungsnadeln ausgeübt wird.

8. Verfahren nach einem oder mehreren der vorangehenden Ansprüche, **dadurch gekennzeichnet, dass** nach dem genannten Imprägnieren und vor dem genannten Polymerisieren und dem Bilden des genannten Paneels (1) außerhalb von mindestens einem des genannten ersten (9) und zweiten (10) faserbasierten Materials eine entsprechende Schutzschicht kombiniert wird, die nach Abschluss der genannten Formung entfernt werden kann, sodass eine glatte Oberfläche des genannten Paneels erzielt wird.

9. Mehrschichtige Paneelstruktur, erzielt durch ein Verfahren nach einem oder mehreren der vorangehenden Ansprüche.

10. Pultrusionsanlage für die kontinuierliche Herstellung eines mehrschichtigen Laminats, umfassend einen Kern (2), der zwischen einem ersten (9) Verstärkungsblatt aus Verbundmaterial und einem zweiten (10) Verstärkungsblatt aus Verbundmaterial angeordnet ist, wobei der genannte Kern (2) ein ein- oder mehrschichtig strukturierter Einsatz ist, der durch Nadelung perforiert werden kann, **dadurch gekennzeichnet, dass** sie eine Zuführeinheit (13) eines ersten (9) und zweiten (10) faserbasierten Materials an den entgegengesetzten Seiten des genannten Kerns (2), eine Nadlungseinheit (14), wobei die genannte Nadlungseinheit so zum genannten Kern (2) angeordnet ist, dass sie durch die Dicke des genannten Kerns (2) und des ersten (9) und zweiten (10) faserbasierten Materials arbeitet, um Fasern des genannten ersten (9) und zweiten (10) faserbasierten Materials durch die Dicke des genannten Kerns (2) zu verbinden, eine Einheit zum Imprägnieren (15) der genannten Fasern mit einem harzbasierten Material, wobei die Einheit zum Imprägnieren Pressmittel (16) aufweist, die geeignet sind, um einen Druck auf das genannte harzbasierte Material auszuüben, um die Einführung des genannten harzbasierten Materials auch an der gesamten Länge der Nadlungslöcher (6) zu gewährleisten, sowie eine Formungseinheit (17) besitzt, die durch eine geeignete Hitzebehandlung das Polymerisieren des genannten harzbasierten Materials durchführt, sodass zumindest das Polymerisieren des harzbasierten Materials, das in den genannten Nadlungslöchern (6) enthalten ist, eine Vielzahl an strukturellen versteifenden Elementen (5) definiert, die das erste (9) und das zweite (10) faserbasierte Material, in Abstand gehalten von genanntem Kern (2), verbinden.

## Revendications

1. Procédé de fabrication d'un panneau multiplex (1), une première (9) et une deuxième (10) matière à base de fibres étant appliquées sur les faces opposées d'une âme (2) dudit panneau (1), ladite âme (2) étant un insert structuré à un seul pli ou à plusieurs plis pouvant être perforée par aiguilletage, les fibres de ladite première (9) et de ladite deuxième (10) matière à base de fibres étant unies par une opération d'aiguilletage à travers l'épaisseur de ladite âme (2), ladite première (9) et ladite deuxième (10) matière à base de fibres étant imprégnées d'une matière à base de résine et ladite matière à base de résine étant polymérisée, ledit aiguilletage, ladite imprégnation et ladite polymérisation étant réalisés via un procédé en continu, ledit procédé en continu étant un procédé d'extrusion par étirage, **caractérisé en ce que** ladite opération d'aiguilletage forme des trous à travers l'épaisseur de ladite âme (2) et de la première (9) et de la deuxième (10) matière à base de fibres pour l'injection de ladite matière à base de résine à l'intérieur des trous d'aiguilletage (6, 11, 12) pour leur extension totale, de sorte qu'au moins la polymérisation de ladite matière à base de résine présente dans lesdits trous d'aiguilletage (6, 11, 12) détermine une pluralité d'éléments structuraux de raidissement (5) qui lient la première (9) et la deuxième (10) matière à base de fibres espacées de ladite âme (2).

2. Procédé selon la revendication précédente, **caractérisé en ce que** ledit aiguilletage précède ladite imprégnation.

3. Procédé selon une ou plusieurs des revendications précédentes, **caractérisé en ce que** ladite opération d'aiguilletage suit ladite imprégnation.

4. Procédé selon une ou plusieurs des revendications précédentes, **caractérisé en ce que** ladite imprégnation est réalisée via l'application d'une pression sur ladite matière à base de résine.

5. Procédé selon une ou plusieurs des revendications précédentes, **caractérisé en ce que** ladite pression est appliquée via un système à vide.

6. Procédé selon une ou plusieurs des revendications précédentes, **caractérisé en ce que** ladite pression est appliquée via un système d'injection en moule fermé.

7. Procédé selon une ou plusieurs des revendications précédentes, **caractérisé en ce que** ladite pression est appliquée par lesdites aiguilles d'aiguilletage.

8. Procédé selon une ou plusieurs des revendications précédentes, **caractérisé en ce que**, après ladite imprégnation et avant ladite polymérisation et le formage dudit panneau (1), à l'extérieur d'au moins une desdites première (9) et deuxième (10) matières à base de fibres, une couche de protection correspondante est associée et peut être retirée à la fin dudit formage de sorte à obtenir une surface lisse dudit panneau.

9. Structure de panneau multiplex obtenue par un procédé selon une ou plusieurs des revendications précédentes.

10. Installation d'extrusion par étirage pour former en continu un stratifié multiplex comprenant une âme (2) positionnée entre une première (9) plaque de renfort en matière composite et une deuxième (10) plaque de renfort en matière composite, ladite âme (2) étant un insert structuré à un seul pli ou à plusieurs plis pouvant être perforée par aiguilletage, **caractérisée en ce qu'**elle comprend une unité d'alimentation (13) d'une première (9) et d'une deuxième (10) matière à base de fibres sur les côtés opposés de ladite âme (2), une unité d'aiguilletage (14), ladite unité d'aiguilletage étant positionnée par rapport à ladite âme (2) de sorte à fonctionner à travers l'épaisseur de ladite âme (2) et de la première (9) et de la deuxième (10) matière à base de fibres pour unir les fibres de ladite première (9) et de ladite deuxième (10) matière à base de fibres à travers l'épaisseur de ladite âme (2), une unité d'imprégnation (15) desdites fibres avec une matière à base de résine, ladite unité d'imprégnation ayant des moyens de pression (16) capables d'appliquer une pression sur ladite matière à base de résine pour assurer l'injection de ladite matière à base de résine également le long de l'extension totale des trous d'aiguilletage (6), et une unité de formage (17) réalisant, via un traitement thermique adéquat, la polymérisation de ladite matière à base de résine, de sorte qu'au moins la polymérisation de la matière à base de résine présente dans lesdits trous d'aiguilletage (6), détermine une pluralité d'éléments structuraux de raidissement (5) qui lient la première (9) et la deuxième (10) matière à base de fibres espacées de ladite âme (2).
